# EUROPEAN PATENT APPLICATION

(11) **EP 2 760 156 A1**
(43) Date of publication of application: **30.07.2014**
(21) Application number: 14151479.4
(22) Date of filing: 16.01.2014
(51) Int. Cl.: H04L 12/18, H04L 12/28

(54) **Systems and Methods for Dynamic Load Reduction Control Messaging**

(30) Priority: 24.01.2013 US 201313749290
(71) Applicant: General Electric Company, Schenectady, New York 12345 (US)
(72) Inventor: Ree, Bradley Richard, Cumming, GA Georgia 30028 (US)
(74) Representative: Picker, Madeline Margaret

(57) **Abstract**

Systems and methods for dynamic load reduction control messaging. In one embodiment, a system can include at least one memory 112 that stores computer-executable instructions; and at least one processor 102 configured to access the at least one memory 112, wherein the at least one processor 102 is configured to execute the computer-executable instructions. The computer-executable instructions can be operable to receive, by the at least one processor 102, a multicast load control instruction for a demand response device 128; generate, based at least in part on the multicast load control instruction, at least one unicast load control instruction; and transmit, by a transmission device coupled to the at least one processor and hundred and 2, the at least one unicast load control instruction to a home area network (HAN) device 126.

## Description

Embodiments of the disclosure relate generally to advanced metering infrastructure (AMI) smart meter devices, and more particularly to systems and methods for dynamic load reduction control messaging using the AMI.

A wide variety of conventional utility meters can be configured to measure consumption and/or communicate with other network devices. For example, conventional smart meters can be configured to transmit messages containing consumption data and/or other monitoring data to household appliances as well as servers and/or controllers. With any communication network or communication technique that may be utilized by a utility meter, there is energy consumption, however negligible. For example, a network radio may consume energy while measuring consumption and/or while communicating with the headend server. Additionally, some of this consumption may occur at peak times.

Some or all of the above needs and/or problems may be addressed by certain embodiments of the disclosure. Certain embodiments may include systems and methods for dynamic load reduction control messaging, such as demand response load control (DRLC) messaging.

According to an embodiment of the disclosure, there is disclosed a system that can include at least one memory that stores computer-executable instructions; and at least one processor configured to access the at least one memory, wherein the at least one processor is configured to execute the computer-executable instructions. The computer-executable instructions can be operable to receive, by the at least one processor, a multicast load control instruction for a demand response device; generate, based at least in part on the multicast load control instruction, at least one unicast load control instruction; and transmit, by a transmission device coupled to the at least one processor, the at least one unicast load control instruction to a home area network (HAN) device.

Further, according to another embodiment of the disclosure, there is disclosed a method that can include receiving, by at least one processor configured to access at least one memory, a multicast load control instruction for a demand response device; generating, based at least in part on the multicast load control instruction, at least one unicast load control instruction; and transmitting the at least one unicast load control instruction to a home area network (HAN) device.

According to another embodiment of the disclosure, there is disclosed one or more computer-readable media storing computer-executable instructions. The computer-executable instructions, when executed by at least one processor, configure the at least one processor to perform operations including: determining a desired load control configuration for a demand response device; generating, based at least in part on the desired load control configuration, at least one multicast load control message; and transmitting the at least one multicast load control message to a home area network (HAN) device.

Other embodiments, systems, methods, computer-readable media, aspects, and features of the disclosure will become apparent to those skilled in the art from the following detailed description, the accompanying drawings, and the appended claims.

Reference will now be made to the accompanying drawings, which are not necessarily drawn to scale, and wherein:
FIG. 1 is a block diagram of a computer environment showing an illustrative system according to an embodiment of the disclosure.
FIG. 2 is a schematic diagram of an illustrative advanced metering infrastructure (AMI) device system for transmitting demand response load control (DRLC) messages according to an embodiment of the disclosure.
FIG. 3 is a flow chart illustrating details of an example method for implementing DRLC messaging for demand response network devices, according to an embodiment of the disclosure.

Illustrative embodiments of the disclosure will now be described more fully hereinafter with reference to the accompanying drawings, in which some, but not all embodiments of the disclosure are shown. The disclosure may be embodied in many different forms and should not be construed as limited to the embodiments set forth herein; rather, these embodiments are provided so that this disclosure will satisfy applicable legal requirements. Like numbers refer to like elements throughout.

Illustrative embodiments of the disclosure are directed to, among other things, systems and methods for dynamic load reduction control messaging. For example, in certain embodiments, a system and/or method can transmit demand response load control (DRLC) messaging for controlling loads of one or more metering devices. In some instances, the metering devices may be connected to a smart-grid network or other AMI network. These devices may include demand response meters, smart meters, advanced metering infrastructure (AMI) devices, and/or home area network (HAN) devices. In some aspects, certain embodiments of the disclosure may be directed to providing load control messages and/or instructions to demand response network devices using multicast messaging.

For example, multicast messages and/or instructions may be transmitted to smart meters that, in some examples, may be configured AMI and/or HAN radios to receive these messages through a network infrastructure. The multicast messages may allow for the AMI network to save transmission costs and transmit messages during limited bandwidth availability. The messages and/or instructions may, in some cases, transmitted to the smart meter which may be in communication with many different HAN devices. An example instruction may be to place the many different HAN devices in a low power mode for a predetermined amount of time. The smart meter may then transmit unicast messages to each of the HAN devices.

When utility companies or other electricity providers generate and/or provide electricity to a grid, the grid may provide electricity to other sub-networks. The sub-networks may include homes and buildings of customers who consume the electricity. Additionally, in some examples, a grid may transmit messages indicative of electricity usage to a headend server for controlling one or more other sub-grids, electricity networks, and/or other consumers or customers networks. The headend server may, in certain instances, provide instructions to one or more networks of devices, each network including one or more AMI devices, smart meters, HAN devices, and/or household appliances. As such, the headend server may be configured to place one or more of the elements (i.e., devices) into a low power mode (i.e., a load shedding mode).

For example, a portion of an AMI system may be placed in a low power mode to reduce potentially wasted power used by the AMI radios. An example message may include a group identifier ID, a start time, a length of low power mode, and/or an indication of a randomization of the length of a low power mode. The smart meter may transmit these instructions as unicast messages to each individual HAN device that is communicatively or directly connected to the smart meter. In this manner, certain technical effects of embodiments of the disclosure may include shedding bandwidth requirements for transmitting DRLC messages and also faster execution of messages from the headend server because many messages can be transmitted as multicast messages.

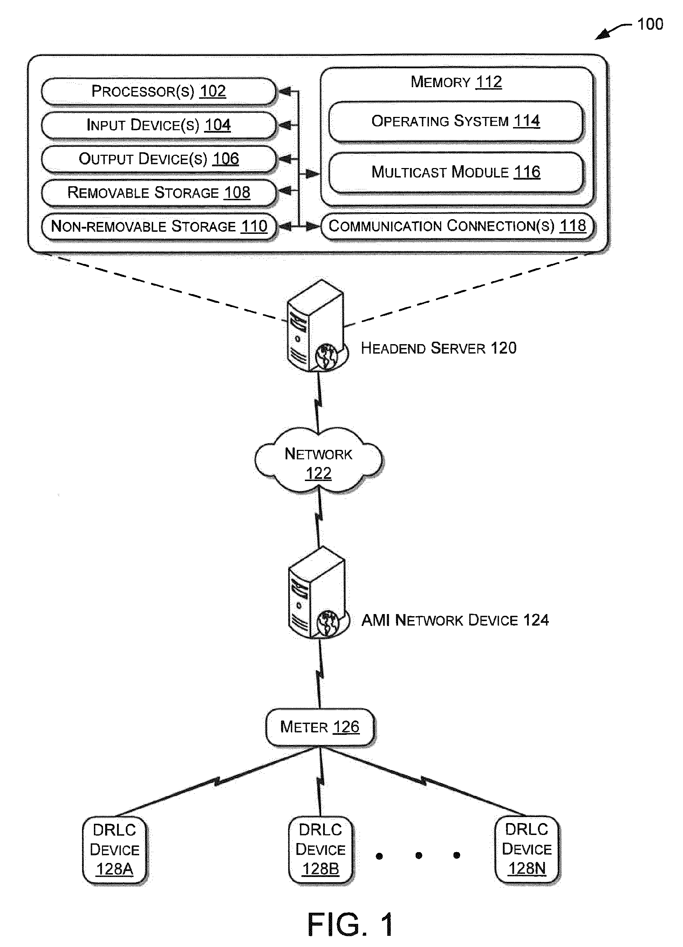

FIG. 1 provides an illustrative overview of one system 100, in which demand response load control messages for demand response network devices may be implemented. The system may include a headend server 120 configured to connect to one or more networks 122 such as, but not limited to, the Internet, other public networks, and/or private networks.

The headend server 120 may also be configured to transmit control messages through the network 122, via an AMI network device 124 to a meter 126. The meter 126 may also be in communication with, via a DRLC device 128. The DRLC device, such as 128A, may include any number of HAN appliances. Various meters may be controlled or otherwise monitored by the headend server 120 via the one or more networks 122 and an AMI network device 124. Additionally, and as noted above, each meter may be configured or otherwise integrated with one or more AMI radios for communicating with NAN or LAN devices and/or one or more HAN devices (or radios) for communicating with HAN appliances or other HAN devices within a home, business, building, or other structure.

In one illustrative configuration, the headend server 120 may comprise at least a memory 112 and one or more processing units (or processors) 102. The one or more processors 102 may be implemented as appropriate in hardware, software, firmware, or combinations thereof. Software or firmware implementations of the one or more processors 102 may include computer-executable or machine-executable instructions written in any suitable programming language to perform the various functions described.

Memory 112 may store program instructions that are loadable and executable on the one or more processors 102 as well as data generated during the execution of these programs. Depending on the configuration and type of the headend server 120, the memory 112 may be volatile (such as random access memory (RAM)) and/or non-volatile (such as read-only memory (ROM), flash memory, etc.). The headend server 120 may also include additional removable storage 108 and/or non-removable storage 110 including, but not limited to, magnetic storage, optical disks, and/or tape storage. The disk drives and their associated computer-readable media may provide non-volatile storage of computer-readable instructions, data structures, program modules, and other data for the computing devices. In some implementations, the memory 112 may include multiple different types of memory, such as static random access memory (SRAM), dynamic random access memory (DRAM), or ROM.

The memory 112, the removable storage 108, and the non-removable storage 110 are all examples of computer-readable storage media. For example, computer-readable storage media may include volatile and non-volatile, removable and non-removable media implemented in any method or technology for storage of information such as computer-readable instructions, data structures, program modules, or other data. The memory 112, the removable storage 108, and the non-removable storage 110 are all examples of computer storage media. Additional types of computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other medium which can be used to store the desired information and which can be accessed by the server or other computing device. Combinations of any of the above should also be included within the scope of computer-readable media. Alternatively, computer-readable communication media may include computer-readable instructions, program modules, or other data transmitted within a data signal, such as a carrier wave, or other transmission. However, as used herein, computer-readable storage media does not include computer-readable communication media.

The headend server 120 may also contain one or more communication connection(s) 118 that allow the headend server 120 to communicate with a stored database, another computing device or server, user terminals, and/or other devices on a network such as, but not limited to, the networks 122. The headend server 120 may also include input device(s) 104 such as a keyboard, mouse, pen, voice input device, touch input device 104, etc., and output device(s) 106, such as a display, speakers, printer, etc.

Turning to the contents of the memory 112 in more detail, the memory 112 may include an operating system 114 and one or more application programs or services for implementing the features disclosed herein including a multicast module 116. In some embodiments, the multicast module may be configured to implement instructions for controlling various DRLC-capable HAN devices simultaneously. In some examples, the multicast module 116 may receive information associated with one or more DRLC-capable HAN device. For example, the multicast module 116 may receive information to change the temperature of thermostats on many different floors of a house to 74 degrees Fahrenheit. In this situation, the multicast module 116 may encode the information in the form of a multicast instruction.

The headend server 120 may transmit the multicast message via the network 122 to an AMI network device 124. In certain embodiments, communications may be facilitated via one or more suitable AMI network devices 124; however, as desired, other networks may be utilized for communication, such as a cellular network and/or the Internet. The AMI network device 124 may be communicatively coupled with a meter 126. In some examples, the meter 126 may include, but is not limited to, demand response meters, smart meters, AMI devices, and/or HAN devices. The meter 126 may receive the multicast message from the AMI network device 124. The meter 126 may convert the multicast messages to unicast messages to transmit to each of the DLRC devices 128A-128N individually. For example, if the meter 126 receives a multicast message to set the thermometer located on multiple floors of a building to 74 degrees Fahrenheit, the meter device 126 must translate the message to multiple unicast messages directed at the appropriate DLRC device 128A-128N, or the thermometer in this particular example.

Various instructions, methods and techniques described herein may be considered in the general context of computer-executable instructions, such as program modules, executed by one or more computers or other devices. Generally, program modules include routines, programs, objects, components, data structures, etc., for performing particular tasks or implementing particular abstract data types. These program modules and the like may be executed as native code or may be downloaded and executed, such as in a virtual machine or other just-in-time compilation execution environment. Typically, the functionality of the program modules may be combined or distributed as desired in various embodiments. An implementation of these modules and techniques may be stored on some form of computer-readable storage media.

The example headend server 120 shown in FIG. 1 is provided by way of example only. Numerous other operating environments, system architectures, and device configurations are possible. Accordingly, embodiments of the present disclosure should not be construed as being limited to any particular operating environment, system architecture, or device configuration.

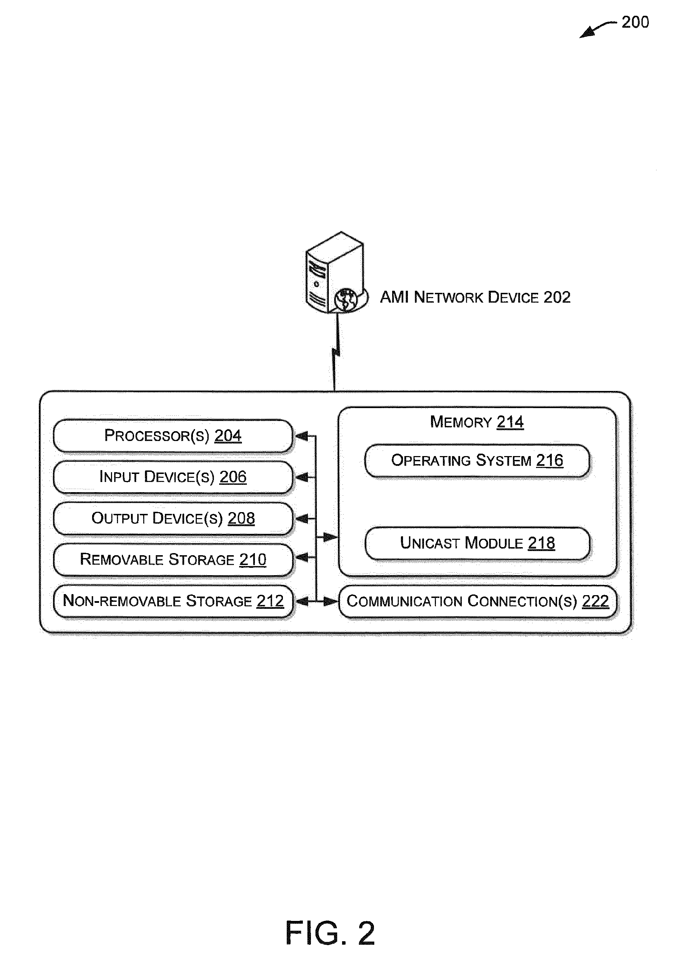

FIG. 2 is a schematic diagram of the illustrative AMI network device system for transmitting DLRC messages. The AMI network device 202 may comprise at least a memory 214 and one or more processing units (or processors) 204. The one or more processors 204 may be implemented as appropriate in hardware, software, firmware, or combinations thereof. Software or firmware implementations of the one or more processors 204 may include computer-executable or machine-executable instructions written in any suitable programming language to perform the various functions described.

Memory 214 may store program instructions that are loadable and executable on the one or more processors 204 as well as data generated during the execution of these programs. Depending on the configuration and type of the AMI network device 202, the memory 214 may be volatile (such as random access memory (RAM)) and/or non-volatile (such as read-only memory (ROM), flash memory, etc.). The AMI network device 202 may also include additional removable storage 210 and/or non-removable storage 212 including, but not limited to, magnetic storage, optical disks, and/or tape storage. The disk drives and their associated computer-readable media may provide non-volatile storage of computer-readable instructions, data structures, program modules, and other data for the computing devices. In some implementations, the memory 214 may include multiple different types of memory, such as static random access memory (SRAM), dynamic random access memory (DRAM), or ROM.

The memory 214, the removable storage 210, and the non-removable storage 212 are all examples of computer-readable storage media. For example, computer-readable storage media may include volatile and non-volatile, removable and non-removable media implemented in any method or technology for storage of information such as computer-readable instructions, data structures, program modules, or other data. The memory 214, the removable storage 210, and the non-removable storage 212 are all examples of computer storage media. Additional types of computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage or other magnetic storage devices, or any other medium which can be used to store the desired information and which can be accessed by the server or other computing device. Combinations of any of the above should also be included within the scope of computer-readable media. Alternatively, computer-readable communication media may include computer-readable instructions, program modules, or other data transmitted within a data signal, such as a carrier wave, or other transmission. However, as used herein, computer-readable storage media does not include computer-readable communication media.

The AMI network device 202 may also contain one or more communications connection(s) 222 that may allow for communication with a stored database, another computing device or server, user terminals, and/or other devices on a network such as, but not limited to, the networks 122. The AMI network device 202 may also include input device(s) 206 such as a keyboard, mouse, pen, voice input device, touch input device, etc., and output device(s) 208, such as a display, speakers, printer, etc.

Turning to the contents of the memory 214 in more detail, the memory 214 may include an operating system 216 and one or more application programs or services for implementing the features disclosed herein including a unicast module 218. The unicast module 218 may receive a multicast message as an input and decode the multicast message as multiple unicast messages. For example, the multicast message may have an identification code indicating a group of DRLC devices 128A-128N. The unicast module 218 may translate these messages to unicast messages for each of the DRLC devices 128(A-N).

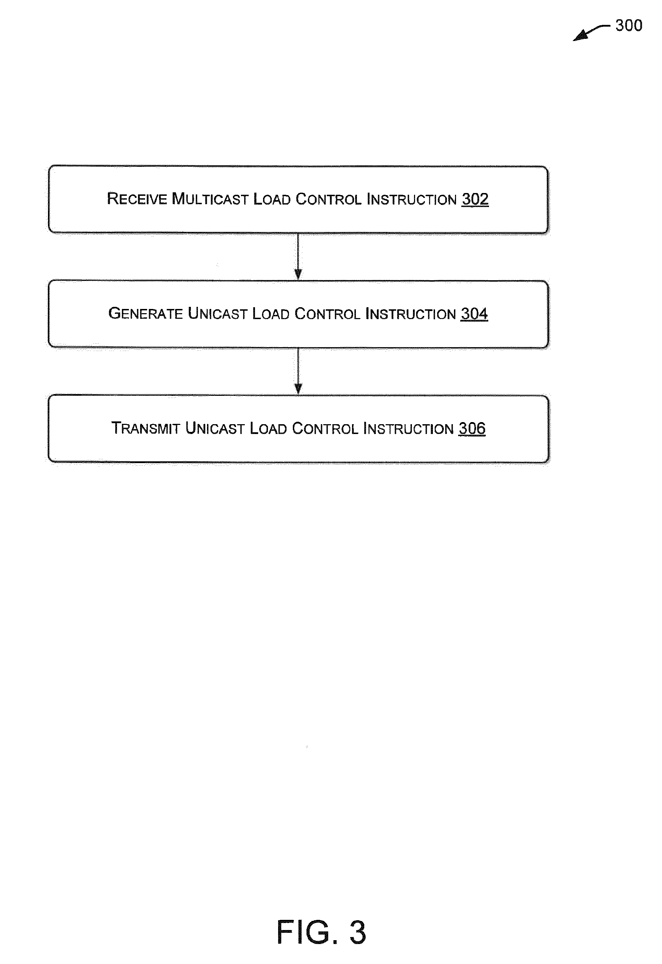

FIG. 3 illustrates an example flow diagram of process 300 for implementing the DRLC messaging, as discussed above.

In this particular implementation, the process 300 may begin at block 302 of FIG. 3 in which the process 300 may receive a multicast load control instruction. In some examples, determining the desired load condition may include making a determination based, in part, on user control settings, demand response settings, peak load times and/or intervals, consumption statistics, and/or factory settings of one or more meters, AMI radios, and/or HAN radios (or devices). As such, the load control configuration determined at block 302 may include one or more settings for low power mode start times, low power mode stop times, low power mode intervals, which components are to be placed in low power mode and for how long (e.g., one setting may indicate that the display screen should be turned off during peak load times while another setting may indicate that metering should only take place every 10 seconds, 30 seconds, 60 seconds, etc.).

At block 304, the process 300 may generate a unicast load control instruction from the received multicast load control message. Additionally, in some aspects, the unicast load control instruction may be formatted in any form such as, but not limited to, Hypertext Markup Language (HTML), Extensible Markup Language (XML), Simple Object Access Protocol (SOAP), Hypertext Transfer Protocol (HTTP), Simple Mail Transfer Protocol (SMTP), text message, or any other machine-readable form. At block 306, the process 300 may terminate by transmitting the unicast load control instruction to each appropriate DRLC device 128A-128N. In this manner, the message may provide control instructions to meters, AMI radios, and/or HAN devices for shedding grid loads during high peak times and/or based on user settings or preferences.

Illustrative methods and systems for implementing the load control of demand response network devices are described above. Some or all of these systems and methods may, but need not, be implemented at least partially by architectures such as those shown in FIGs. 1-2 above.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

Various aspects and embodiments of the present invention are defined by the following numbered clauses:
1. A system, comprising:
   at least one memory that stores computer-executable instructions;
   at least one processor configured to access the at least one memory, wherein the at least one processor is configured to execute the computer-executable instructions to:
      receive, by the at least one processor, a multicast load control instruction for a demand response device;
      generate, based at least in part on the multicast load control instruction, at least one unicast load control instruction; and
      transmit, by a transmission device coupled to the at least one processor, the at least one unicast load control instruction to a home area network (HAN) device.
2. The system of clause 1, wherein the system comprises an advanced metering infrastructure (AMI) network device and the HAN device comprises a HAN meter.
3. The system of any preceding clause, wherein the system comprises a metering device and the HAN device comprises the demand response device.
4. The system of any preceding clause, wherein the demand response device comprises a demand response load control (DRLC) device.
5. The system of any preceding clause, wherein at least one of the multicast load control instruction or the unicast load control instruction comprises an instruction to decrease power consumption.
6. The system of any preceding clause, wherein the instruction to decrease power consumption comprises at least one of an amount of power consumption decrease, a start time of power consumption decrease, a length of power consumption decrease, or a randomization indicator.
7. The system of any preceding clause, wherein the generation of the at least one unicast load control instruction comprises identifying at least one group member associated with the multicast load control instruction.
8. The system of any preceding clause, wherein the HAN device comprises at least one of a consumer product, a relay configured to control a consumer product, or a meter.
9. A method, comprising:
   receiving, by at least one processor configured to access at least one memory, a multicast load control instruction for a demand response device;
   generating, based at least in part on the multicast load control instruction, at least one unicast load control instruction; and
   transmitting the at least one unicast load control instruction to a home area network (HAN) device.
10. The method of any preceding clause, wherein the at least one processor is configured to perform an instruction for controlling an advanced metering infrastructure (AMI) network device and the HAN device comprises a HAN meter.
11. The method of any preceding clause, wherein the at least one processor is configured to perform an instruction for controlling a metering device and the HAN device comprises the demand response device.
12. The method of any preceding clause, wherein the demand response device comprises a demand response load control (DRLC) device.
13. The method of any preceding clause, wherein at least one of the multicast load control instruction or the unicast load control instruction comprises an instruction to decrease power consumption.
14. The method of any preceding clause, wherein the instruction to decrease power consumption comprises at least one of an amount of power consumption decrease, a start time of power consumption decrease, a length of power consumption decrease, or a randomization indicator.
15. The method of any preceding clause, wherein generating the at least one unicast load control instruction comprises identifying at least one group member associated with the multicast load control instruction.
16. The method of any preceding clause, wherein the HAN device comprises at least one of a consumer product, a relay configured to control a consumer product, or a meter.
17. One or more computer-readable media storing computer-executable instructions that, when executed by at least one processor, configure the at least one processor to perform operations comprising:
   determining a desired load control configuration for a demand response device;
   generating, based at least in part on the desired load control configuration, at least one multicast load control message; and
   transmitting the at least one multicast load control message to a home area network (HAN) device.
18. The method of any preceding clause, wherein the transmitting is performed by a headend server and the multicast load control message is transmitted to an advanced metering infrastructure (AMI) network device.
19. The method of any preceding clause, wherein the multicast load control instruction comprises an instruction to decrease power consumption.
20. The method of any preceding clause, wherein the instruction to decrease power consumption comprises at least one of an amount of power consumption decrease, a start time of power consumption decrease, a length of power consumption decrease, or a randomization indicator.

## Claims

1. A method (300), comprising:
receiving (302), by at least one processor configured to access at least one memory, a multicast load control instruction for a demand response device;
generating (304), based at least in part on the multicast load control instruction, at least one unicast load control instruction; and
transmitting (306) the at least one unicast load control instruction to a home area network (HAN) device.

2. The method of claim 1, wherein the at least one processor is configured to perform an instruction for controlling an advanced metering infrastructure (AMI) network device and the HAN device comprises a HAN meter.

3. The method of claim 1 or claim 2, wherein the at least one processor is configured to perform an instruction for controlling a metering device and the HAN device comprises the demand response device.

4. The method of claim 1, 2 or 3, wherein the demand response device comprises a demand response load control (DRLC) device.

5. The method of any preceding claim, wherein at least one of the multicast load control instruction or the unicast load control instruction comprises an instruction to decrease power consumption.

6. The method of claim 5, wherein the instruction to decrease power consumption comprises at least one of an amount of power consumption decrease, a start time of power consumption decrease, a length of power consumption decrease, or a randomization indicator.

7. The method of any preceding claim, wherein generating (304) the at least one unicast load control instruction comprises identifying at least one group member associated with the multicast load control instruction.

8. A system, comprising:
at least one memory (112; 214) that stores computer-executable instructions;
at least one processor (102; 204) configured to access the at least one memory (112; 214), wherein the at least one processor (102; 204) is configured to execute the computer-executable instructions to perform the method of any one of claims 1 to 7.

9. The system of claim 8, wherein the system comprises an advanced metering infrastructure (AMI) network device (124; 202) and the HAN device comprises a HAN meter (126).

10. The system of claim 8 or claim 9, wherein the system comprises a metering device (126) and the HAN device comprises the demand response device (128).

11. The system of claim 8, 9 or 10, wherein the demand response device comprises a demand response load control (DRLC) device (128).

12. The system of any one of claims 8 to 11, wherein the HAN device comprises at least one of a consumer product, a relay configured to control a consumer product, or a meter.

13. One or more computer-readable media storing computer-executable instructions that, when executed by at least one processor, configure the at least one processor to perform operations comprising:
determining a desired load control configuration for a demand response device;
generating (304), based at least in part on the desired load control configuration, at least one multicast load control message; and
transmitting (306) the at least one multicast load control message to a home area network (HAN) device.

14. The one or more computer readable media of claim 13, wherein the transmitting (306) is performed by a headend server (120) and the multicast load control message is transmitted to an advanced metering infrastructure (AMI) network device (124; 202).

15. The one or more computer readable media of claim 13 or claim 14, wherein the multicast load control instruction comprises an instruction to decrease power consumption, wherein, preferably, the instruction to decrease power consumption comprises at least one of an amount of power consumption decrease, a start time of power consumption decrease, a length of power consumption decrease, or a randomization indicator.
